# EUROPEAN PATENT APPLICATION

(11) **EP 3 203 707 A1**
(43) Date of publication of application: **09.08.2017**
(21) Application number: 16382046.7
(22) Date of filing: 03.02.2016
(51) Int. Cl.: H04L 29/08, G06Q 30/02

(54) **A COMPUTER-IMPLEMENTED WEB TRACKING IDENTIFICATION METHOD, A WEB TRACKER DETECTING ENTITY AND COMPUTER PROGRAM PRODUCTS**

(71) Applicant: Telefonica Digital España, S.L.U., 28013 Madrid (ES)
(72) Inventor: Blackburn, Jeremy, 28013 Madrid (ES); Papagiannaki, Konstantina, 28013 Madrid (ES); Varvello, Matteo, 28013 Madrid (ES)
(74) Representative: Carlos Hernando, Borja

(57) **Abstract**

The method comprising:
- constructing, by a web tracker detecting entity, a first graph taking into consideration web requests requested by a user through at least one network, said first graph comprising nodes representing web pages or domains said user has visited and edges connecting the nodes representing links established from one node to another node, and said nodes being placed into one of two categories, and said edges only existing between nodes of different categories;
- marking, by the web tracker detecting entity, nodes and edges in the constructed first graph with relevant information concerning the web requests and computing by an algorithm communities within the first constructed graph; and
- using, by the web tracker detecting entity, said computed communities to identify one or more web trackers.

## Description

### Technical Field

The present invention is directed, in general, to the field of web tracking. In particular, the invention relates to a computer-implemented web tracking identification method, a web tracker detecting entity and computer program products of the method that make use of the structure of web requests to automatically identify web trackers.

### Background of the Invention

Web tracking is highly prevalent on the web today. From the perspective of website owners and of trackers, it provides desirable functionality, including personalization, site analytics, and targeted advertising.

From the perspective of a tracker, the larger a browsing profile it can gather about a user, the better service it can provide to its customers (the embedding websites) and to the user herself (e.g., in the form of personalization). From the perspective of users, however, larger browsing profiles spell greater loss of privacy. A user may not, for instance, wish to link the articles he or she views on a news site with the type of adult sites he or she visits, much less reveal this information to an unknown third party. Even if the user is not worried about the particular third party, this data may later be revealed to unanticipated parties through court orders or subpoenas.

Tracking is often invisible. Advertisers build a profile of a user by explicitly issuing, or inferring from browser fingerprints, a unique identifier and recording what web sites they visit over time without the explicit knowledge of the user.

There are two main types of trackers: 1) intra-site trackers and 2) inter-site trackers. Intra-site trackers correlate users actions on a single web site, and ostensibly cannot be used to correlate traffic that occurs on more than one site. This includes repeated visits to the site and specific details on how the user traverses the site. Inter-site trackers, on the other hand, track users' activities across the web as a whole. Depending on the details of the tracker, inter-site trackers track the same information as intra-site trackers, but are not limited to activity on a single site.

A number of studies have empirically analyzed the ecosystem of trackers and third-parties on the web, focusing on behavioral and network aspects.

Roesner et al. [1] provide a thorough study of web tracking, classifying tracking behaviors and evaluating defense mechanisms. The authors of said scientific document use web traces from AOL search logs to simulate real user browsing behavior and analyze a dataset containing 2k pages and 35 users. The work focuses on classifying tracking mechanisms that use cookies and proposes a Firefox add-on, which transparently removes cookies from third-party requests. They build a classification framework for distinguishing different types of trackers, based on their functionality. Instead, present invention distinguishes between trackers and non-trackers, while it is oblivious to the tracker mechanisms and functionality specifics.

Bau et al. [2] propose a machine learning mechanism for detecting trackers. In said document machine learning approaches are evaluated and results presented from a prototype implementation. They use DOM-like hierarchies from the crawl data HTTP content headers as the main features. While they achieve precision of 54% for 1% FPR, present invention achieve much better precision and lower FRP, while they do not rely on page content collection.

Gomer et al. [3] investigate the network structure of third-party tracking domains. They discover a consistent network structure across different markets, with a dominant connected component that includes the vast majority of tracking nodes and connections. They show that tracking networks expose small-world network characteristics, where a small group of entities are highly connected among them. These findings are in agreement with present invention findings that the majority of trackers belong to the same connected component and are tightly connected among them.

Falahrastegar et al. [4] examine the geographical properties of third-party trackers. They show that there are several trackers that focus on specific regions or countries, while there also exist a small number of international corporations with dominant presence across regions.

Ihm et al. [5] analyze web traffic over a 5-year period. They use a distributed proxy and analyze traffic from 70k users and 187 countries. The work focuses on general web traffic characteristics, such as bandwidth, browser popularity, page complexity and data redundancy. In this document, the authors do not make a separate analysis on trackers or tracking behavior.

On the other hand, there are two current solutions in use. The first is services like AdBlock which collect crowdsourced data on URLs that users have identified as trackers. The second is browser extensions that monitor a given user's traffic.

There are three major limitations with the crowdsourced approach. First, new trackers are identified as users recognize them, so the lag time between a new tracker appears and a user recognizes it could be a substantial amount of time. Second, there are likely to be a number of false negatives with this approach. Simply put, if a user does not recognize that a URL is a tracker, then it will remain unidentified. Third, the list must be distributed to end users. A stale list leaves users exposed.

For per-user browser plugins, the major limitations have to do with scaling and the complexity of having a separate browser extension. Tools like the Ghostery Firefox add-on aim to provide users with insight into the trackers they encounter on the web. What these tools do not consider, however, are the differences between types of trackers, their capabilities, and the resulting scope of the browsing profiles they can compile. Further, each individual user must install the extension and thus there is no leveraging of the big data produced by millions of users that could allow for more accurate and timely detection.

It is desirable to provide, therefore, new methods and web tracking entities for web tracking identification that make use of the structure of web requests to automatically identify trackers.

### References:

[1] Roesner et al., "Detecting and Defending Against Third-Party Tracking on the Web"; 9th USENIX Symposium on Networked Systems Design and Implementation (NSDI 2012); https://www.usenix.org/system/files/conference/nsdi12/nsdi12-final17.pdf
[2] Bau et al., "A Promising Direction for Web Tracking Countermeasures"; https://www.jonathanmayer.org/papers_data/bau13.pdf
[3] Gomer et al.: "Network Analysis of Third Party Tracking; User Exposure to Tracking Cookies through Search"; http://eprints.soton.ac.uk/360065/1/Search&Tracking-WI2013-CameraReady-FINAL.pdf
[4] Ihm et al.: "Towards Understanding Modern Web Traffic"; http://conferences.sigcomm.org/imc/2011/docs/p295.pdf
[5] Falahrastegar et al.: "Anatomy of the Third-Party Web Tracking Ecosystem"; http://arxiv.org/abs/1409.1066

### Description of the Invention

To that end the present invention proposes, according to one aspect, a computer-implemented web tracking identification method, which comprises the following steps executed by a web tracker detecting entity such as a web proxy server:
- constructing a first graph taking into consideration web requests requested by a user through at least one network (e.g. Internet), wherein said first graph comprises nodes representing web pages or domains said user has visited, and edges connecting the nodes representing links established from one node to another node, and wherein said nodes are placed into one of two categories, a first category referring to web pages or domains directly visited by the user and a second category referring to web pages or domains triggered due to a previous access to web pages or domains visited by the user, and said edges only existing between nodes of different categories;
- marking nodes and edges in the constructed first graph with relevant information concerning the web requests and computing by an algorithm communities within the first constructed graph; and
- using said computed communities to identify one or more web trackers.

According to the proposed method, the relevant information concerning the web requests comprises, for the nodes, the geographic location of the user and server serving the web request(s), and for the edges, the type and/or distribution of data transferred as a result of a web request.

According to an embodiment, the web tracker detecting entity further comprises converting the first constructed graph into a second graph, or Host-projection graph, by taking into consideration from the first constructed graph only said second category nodes and by linking the nodes of the second graph with an edge provided that both nodes were triggered from a same web page or domain.

Preferably, the algorithm comprises a label propagation algorithm exploiting at least the constructed first graph to propagate tags therein and identifying connected groups of nodes in the constructed first graph sharing a same tag.

According to an embodiment, the web requests are acquired by the web tracker detecting entity by accessing a database storing them. In this case, the web requests are, subsequently to the accessing step, analyzed and processed by the web tracker detecting entity to identify the web requests that were initiated by the user.

Alternatively, according to an embodiment, the web requests are directly received by the web tracker detecting entity from the user.

According to yet another embodiment, the proposed method calculates different network statistics from the constructed first graph including at least one of centrality degree, betweenness, or assortativity.

Other embodiments of the invention that are disclosed herein include a web tracker detecting entity and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Present invention is automated, that is, instead of relying on users manually identifying web trackers, it collects and analyzes information about the web pages or domains users visit, and automatically infer which of these web trackers are.

In addition, present invention can be deployed in a transparent manner, as it does not require human intervention, so it can be deployed in an unobtrusive way. Current solutions tend to require end users to install a browser plugin and maintain an updated list of web trackers. Because present invention does not require access to browser internals, but rather just access web log patterns, it can be deployed as a cloud based service.

Also present invention can scale a large number of inputs and is resilient to attempts at hiding web trackers.

### Brief Description of the Drawings

The previous and other advantages and features will be more fully understood from the following detailed description of embodiments, with reference to the attached figures, which must be considered in an illustrative and non-limiting manner, in which:
Fig. 1 is a flowchart of a method for web tracking identification according to an embodiment of the present invention.
Fig 2 is a schematic illustration in which the first constructed graph or bipartite graph is converted in a second graph, or host-projection graph.
Fig. 3A illustrates an example of label propagation algorithm and Fig. 3B illustrates an example of labeling via neighborhood composition according to an embodiment of the present invention.
Fig. 4 is a flowchart illustrating another embodiment of the present invention.

### Detailed Description of the Invention and of Preferred Embodiments

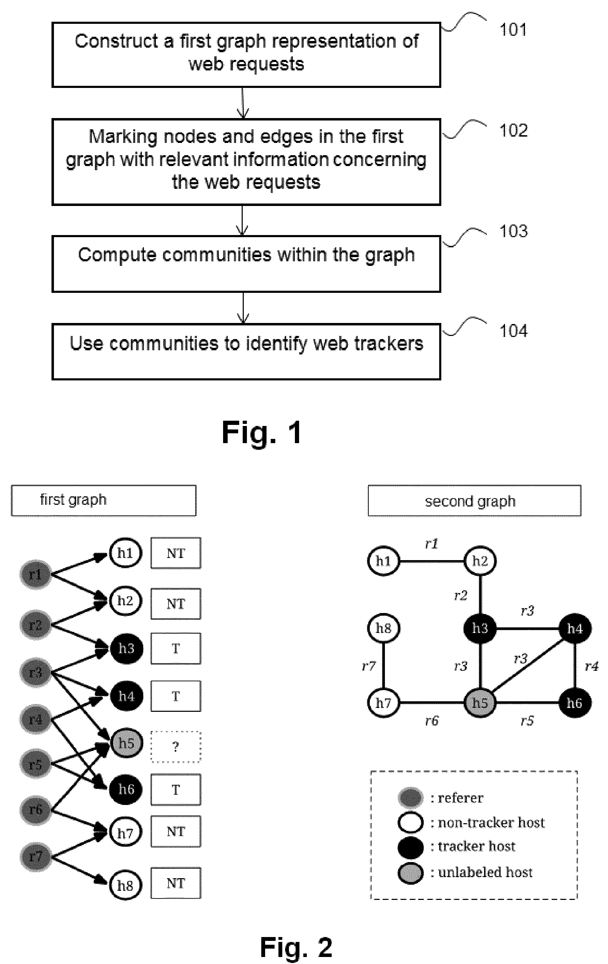

Fig. 1 illustrates an embodiment of a method for web tracking identification. According to this embodiment, a web tracker detecting entity (not illustrated) including one or more processor and at least one memory such as a web proxy server, comprises, at step 101, the construction of a first graph with nodes and edges by considering web requests requested by a user (not requested either) through at least one network (such as the Internet). Nodes in the first graph represent web pages or domains (URLs) the user has visited, and edges connecting the nodes represent links established from one node to another node (e.g. from one web page to another). In addition, the nodes are placed into one of two categories, a first category referring to web pages or domains directly visited by the user and a second category referring to web pages or domains triggered due to a previous access to web pages or domains visited by the user, said edges only existing between nodes of different categories.

Once the first graph is computed, the nodes and edges thereof, step 102, are marked with relevant information concerning the web requests, for example, edges are labeled with the distribution of data (bytes) transferred as a result of the web requests, and nodes are labeled with the geographic location of the user and server serving the web requests. Then, step 103, an algorithm computes communities within the first constructed graph, and finally, step 104, said computed communities are used to identify one or more web trackers.

Within the computed communities, said algorithm, may compute a variety of network statistics, for instance standard metrics such as degree centrality (a measure of the number of connections a given node has), betweenness (a measure of how much information flow is mediate by a given node), assortativity (a measure of how much "popular" nodes are connected to each other), among others.

The first graph, or bipartite graph, constructed at step 101, has two types of nodes: 1) those the user explicitly visited and 2) those that were visited due to embedded links from 1). While the bipartite graph has interesting structures, it is often more useful to work on graphs that have only a single class of nodes. For this reason, according to an embodiment (see Fig. 2), a second graph or host-projection graph is generated from the first graph, said second graph collapsing the first graph of nodes of two classes into a graph of nodes of just one class. The second graph has one node for each web page or domain that was visited due to an embedded link (e.g., web trackers, images, etc.). In addition, an edge connects these nodes if and only if they were both visited from the same source page. I.e., if two nodes are linked in the second graph that means that the web page or domain they represent were both embedded in the same web page.

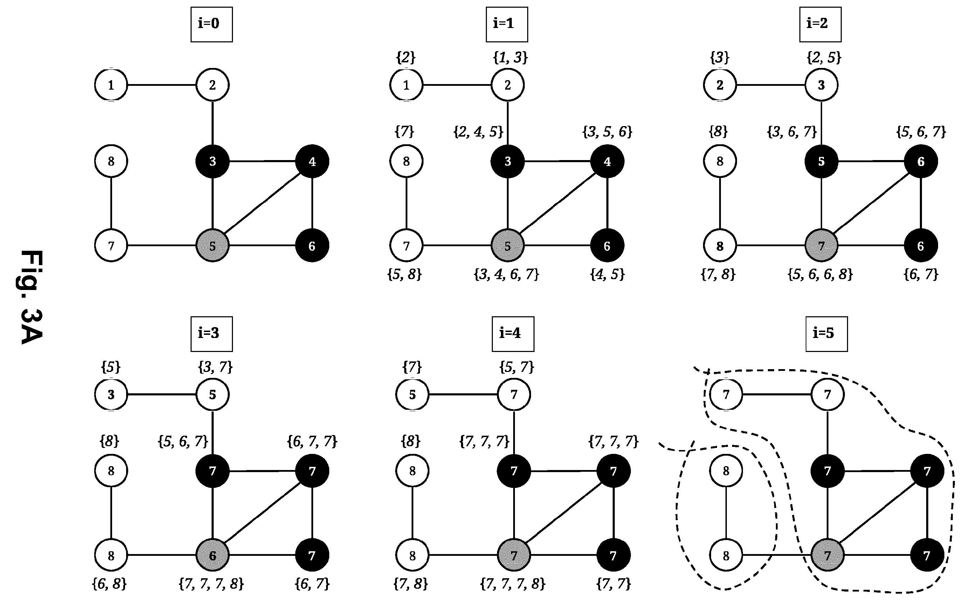

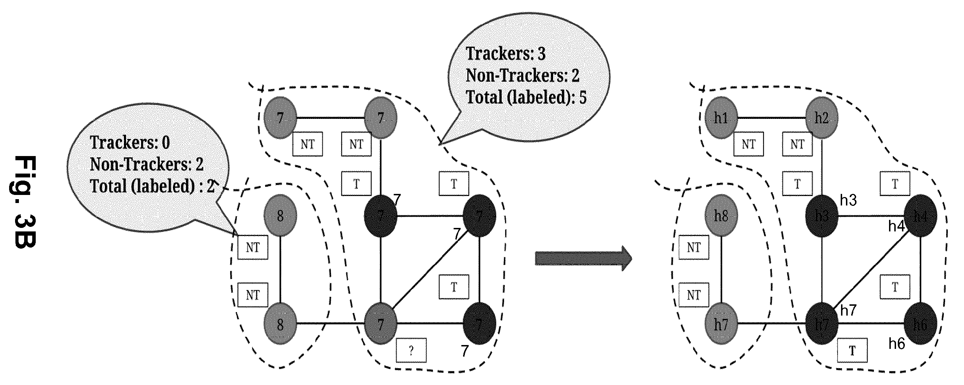

According to a preferred embodiment, the algorithm computing communities on the first graph (also on the second graph if preferred, depending on the embodiment of the invention used), comprises a Label propagation algorithm. This type of algorithm, as shown in Fig. 3A, consists of an iterative process, which exploits the structure of the graph to propagate tags therein and identifies densely connected groups of nodes sharing a same tag. Initially, nodes are assigned unique labels. Then, the algorithm proceeds in iterations, where nodes exchange labels with their neighbors. In each iteration, a node receives a list of the all the labels of its immediate neighbors and adopts the most frequent label among them. The algorithm converges when iteration results in no label changes. To examine how "close" a given node (web tracker) is to other nodes of similar/dissimilar labels, the web tracker detecting entity then examines (Fig. 3B) each unlabeled node and calculates the fractions of its neighbors (i.e., nodes that are directly connected to it in the graph) are trackers.

According to the embodiments of Figs 3A and 3B, the results thereof can be used by the web tracker detecting entity to identify the web trackers. Upon convergence of the first graph (or the second graph), it can be considered that nodes with the same label belong to the same cluster. Then, a previously known list of web trackers can be used to seed the web trackers inside the clusters. White-listed nodes are tagged as non-trackers. Finally, the web tracker detecting entity assigns a tag to each cluster, by choosing the most popular tag among its cluster members. Unlabeled nodes are classified by assigning them the tag of the cluster in which they belong.

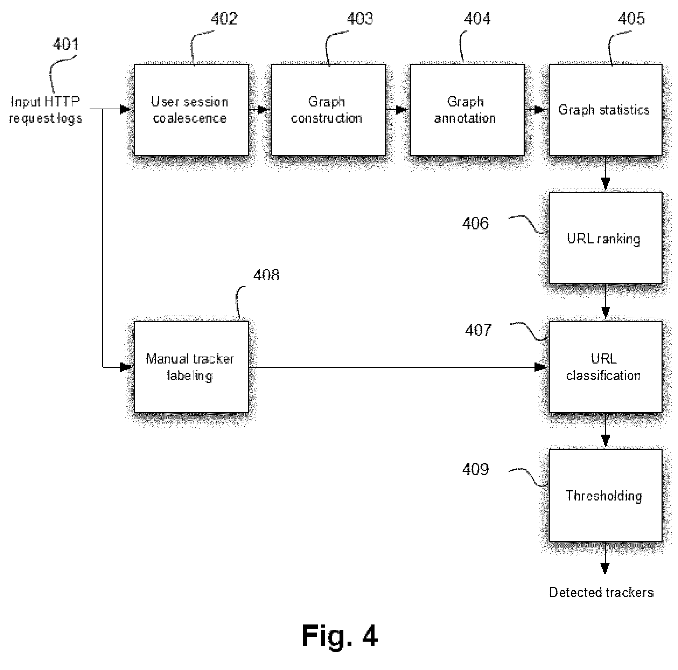

With reference now to Fig. 4, therein it is illustrated a high level block diagram illustrating present invention components and use according to an embodiment. First, the web tracker detecting entity accesses a database storing web requests logs (HTTP requests) 401. Next, it parses the web requests logs coalesces user session 402 (I.e. the logs are processed and cleaned to identify which web requests were initiated by the user). From this, the first graph is constructed 403. Then, this first graph is annotated with additional information from the web requests logs 404. After the first graph has been annotated, the web tracker detecting entity computes a set of graph statistics 405. Once computed, these statistics can be used to rank each individual web page or domain 406. For training purposes, a set of known web trackers may be labeled in the web tracker detecting entity. Then, web pages or domains are classified based on the computer statistics 407, ranking them, and using manually labeled web trackers as ground truth 408. Finally, thresholds are selected to maintain a desired balance between true and false positives 409.

This process can be performed in an incremental fashion, with web requests coming in as a stream. In this case, the constructed first graph is continuously updated and metrics are recalculated as the first graph changes.

According to the invention, the embodiment detailed on Fig. 4 could be also performed for the case in which a second graph is generated from the first graph.

Even the above embodiments of the present invention have been described by considering that the web tracker detecting entity is a web proxy server, according to present invention the web tracker detecting entity may also work, in accordance with other embodiments, as a web browser extension to identify web trackers.

The proposed invention may be implemented in hardware, software, firmware, or any combination thereof. If implemented in software, the functions may be stored on or encoded as one or more instructions or code on a computer-readable medium.

Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media. Any processor and the storage medium may reside in an ASIC. The ASIC may reside in a user terminal. In the alternative, the processor and the storage medium may reside as discrete components in a user terminal.

As used herein, computer program products comprising computer-readable media including all forms of computer-readable medium except, to the extent that such media is deemed to be non-statutory, transitory propagating signals.

The scope of the present invention is defined in the following set of claims.

## Claims

1. A computer-implemented web tracking identification method, comprising:
- constructing, by a web tracker detecting entity, a first graph taking into consideration web requests requested by a user through at least one network,
wherein said first graph comprises nodes representing web pages or domains said user has visited and edges connecting the nodes representing links established from one node to another node, and
wherein said nodes being placed into one of two categories, a first category referring to web pages or domains directly visited by the user and a second category referring to web pages or domains triggered due to a previous access to web pages or domains visited by the user, and said edges only existing between nodes of different categories;
- marking, by the web tracker detecting entity, nodes and edges in the constructed first graph with relevant information concerning the web requests and computing by an algorithm communities within the first constructed graph; and
- using, by the web tracker detecting entity, said computed communities to identify one or more web trackers.

2. The method of claim 1, further comprising converting, by the web tracker detecting entity, the first constructed graph into a second graph by taking into consideration from the first constructed graph only said second category nodes and by linking the nodes of the second graph with an edge provided that both nodes were triggered from a same web page or domain.

3. The method of claim 1, wherein the algorithm comprises a label propagation algorithm that exploits at least the constructed first graph to propagate tags therein and that identifies connected groups of nodes in the constructed first graph sharing a same tag.

4. The method of claim 1, wherein the web requests being acquired by the web tracker detecting entity by accessing a database storing them, the web requests being, subsequently to said accessing step, analyzed and processed by the web tracker detecting entity to identify the web requests that were initiated by the user.

5. The method of claim 1, wherein the web requests being directly received by the web tracker detecting entity from the user.

6. The method of claim 1, wherein the relevant information concerning the web requests comprises, for the nodes, the geographic location of the user and server serving the web request(s), and for the edges, the type and/or distribution of data transferred as a result of a web request.

7. The method of any of previous claims, further comprising calculating different network statistics from the constructed first graph, said network statistics including at least one of centrality degree, betweenness, or assortativity.

8. The method of claim 1, wherein the at least one network comprises Internet.

9. The method of claim 1, wherein said web tracker detecting entity comprises a web proxy server.

10. A web tracker detecting entity, comprising one or more processors and at least one memory, said one or more processors being configured to:
- constructing a first graph taking into consideration web requests requested by a user through at least one network, wherein said first graph comprises nodes representing web pages or domains said user has visited and edges connecting the nodes representing links established from one node to another node, and wherein said nodes being placed into one of two categories, a first category referring to web pages or domains directly visited by the user and a second category referring to web pages or domains triggered due to a previous access to web pages or domains visited by the user, and said edges only existing between nodes of different categories;
- marking nodes and edges in the constructed first graph with relevant information concerning the web requests and computing by an algorithm communities within the first constructed graph; and
- using said computed communities to identify one or more web trackers.

11. The web tracker detecting entity of claim 10, wherein the one or more processor being further configured to convert the first constructed graph into a second graph by taking into consideration from the first constructed graph only said second category nodes and by linking the nodes of the second graph with an edge provided that both nodes were triggered from a same web page or domain.

12. The web tracker detecting entity of claim 10, wherein the algorithm comprises a label propagation algorithm that exploits at least the constructed first graph to propagate tags therein and that identifies connected groups of nodes in the constructed first graph sharing a same tag.

13. The web tracker detecting entity of claim 10, wherein the relevant information concerning the web requests comprises, for the nodes, the geographic location of the user and server serving the web request(s), and for the edges, the type and/or distribution of data transferred as a result of a web request.

14. The web tracker detecting entity of claim 10 or 11, wherein said web tracker detecting entity comprises a web proxy server.

15. A computer program product comprising executable instructions that, when executed by one or more processors of a computer system, cause the computer system to perform the method of any one of the preceding claims 1 to 9.
